# EUROPEAN PATENT APPLICATION

(11) **EP 4 645 122 A1**
(43) Date of publication of application: **05.11.2025**
(21) Application number: 24825148.0
(22) Date of filing: 04.06.2024
(51) Int. Cl.: G06F 16/957

(54) **PAGE RENDERING METHOD AND APPARATUS, AND ELECTRONIC DEVICE, COMPUTER-READABLE STORAGE MEDIUM AND COMPUTER PROGRAM PRODUCT**

(30) Priority: 19.06.2023 CN 202310732158
(71) Applicant: Tencent Technology (Shenzhen) Company Limited, Shenzhen, Guangdong 518057 (CN)
(72) Inventor: ZHANG, Changrong, Shenzhen, Guangdong 518057 (CN); JIANG, Weizhou, Shenzhen, Guangdong 518057 (CN); LU, Qiang, Shenzhen, Guangdong 518057 (CN)
(74) Representative: Gunzelmann, Rainer
(86) International application number: PCT/CN2024/097277
(87) International publication number: WO 2024/260252

(57) **Abstract**

Provided in the present application are a page rendering method and apparatus, and a device, a storage medium and a program product. The embodiments of the present application can be applied to page rendering scenarios of applets of application software, operating systems, etc. The method comprises: in response to a starting operation for an applet, starting a browser process of a browser by means of a client process of an application program client, and executing a service logic code of the applet by means of the browser process, wherein the applet runs in the application program client; in response to the browser process executing a calling code in the service logic code in respect of a first rendering function, sending a calling processing request to the client process by means of the browser process, wherein the first rendering function is a graphic rendering function that is called by the browser process, and the first rendering function is used for rendering a page frame of the applet; in response to the calling processing request, determining, by means of the client process, a second rendering function corresponding to the first rendering function, and calling the second rendering function, wherein the second rendering function and the first rendering function have the same graphic rendering function; and performing graphic rendering on the page frame of the applet by means of the second rendering function, so as to obtain a rendering result of the page frame of the applet.

## Description

### RELATED APPLICATION

This application is filed based on and claims priority to Chinese Patent Application No. 202310732158.7, filed on June 19, 2023, which is incorporated herein by reference in its entirety.

### TECHNICAL FIELD

This application relates to graphics processing technologies, and in particular, to a page rendering method and apparatus, an electronic device, a computer-readable storage medium, and a computer program product.

### BACKGROUND

A mini program is an application (APP) that can be used without being downloaded or installed, which can provide users with significant convenience when using different APPs. In the related art, running of a mini program is implemented by means of an embedded browser (e.g., WebView). To be specific, service logic code of the mini program is interpreted and executed through the browser process, and a graphics rendering function is called through the browser process, to render a page frame of the mini program. However, using the browser process to render the page frame of the mini program results in a relatively high risk of force close of the mini program.

### SUMMARY

Embodiments of this application provide a page rendering method and apparatus, an electronic device, a computer-readable storage medium, and a computer program product, which can improve running stability of a mini program.

Technical solutions of the embodiments of this application are implemented as follows:
An embodiment of this application provides a page rendering method, which is executable by an electronic device, and includes:
executing service logic code of a mini program within an application (APP) client through a browser process of a browser in response to a starting operation for the mini program;
transmitting a calling processing request to a client process of the APP client through the browser process in response to execution of calling code for a first rendering function in the service logic code through the browser process, the first rendering function being a browser-side graphics rendering function for rendering a page frame of the mini program;
in response to the calling processing request, determining a second rendering function through the client process, wherein the second rendering function is a client-side graphics rendering function corresponding to the first rendering function, and calling the second rendering function through the client process, wherein the page frame of the mini program is rendered through the second rendering function, to obtain a rendering result of the page frame of the mini program.

An embodiment of this application provides a page rendering apparatus, including:
a process starting module, configured to execute service logic code of a mini program within an APP client through a browser process of a browser in response to a starting operation for the mini program;
a request transmitting module, configured to transmit a calling processing request to a client process of the APP client through the browser process in response to execution of calling code for a first rendering function in the service logic code through the browser process, the first rendering function being a browser-side graphics rendering function for rendering a page frame of the mini program;
a calling processing module, configured to: in response to the calling processing request, determine a second rendering function through the client process, wherein the second rendering function is a client-side graphics rendering function corresponding to the first rendering function, and call the second rendering function through the client process, wherein the page frame of the mini program is rendered through the second rendering function, to obtain a rendering result of the page frame of the mini program.

An embodiment of this application provides an electronic device, including:
a memory, configured to store computer-executable instructions or a computer program; and
a processor, configured to implement the page rendering method provided in the embodiments of this application when executing the computer-executable instructions or the computer program stored in the memory.

An embodiment of this application provides a computer-readable storage medium, having computer-executable instructions or a computer program stored therein, the computer-executable instructions or the computer program, when executed by a processor, being configured to implement the page rendering method provided in the embodiments of this application.

An embodiment of this application provides a computer program product, including a computer program or computer-executable instructions, the computer program or the computer-executable instructions, when executed by a processor, implementing the page rendering method provided in the embodiments of this application.

The embodiments of this application have the following beneficial effects. When starting a mini program, an electronic device executes service logic code of the mini program within an APP client through a browser process of a browser, transmits a calling processing request to a client process of the APP client through the browser process when the execution reaches the calling code for a first rendering function in the service logic code, so as to convert, through the calling processing request, the calling of the first rendering function by the browser process into calling of a second rendering function by the client process, and performs graphics rendering on a page frame of the mini program through the second rendering function. Since the second rendering function is a rendering function which has the same graphics rendering functionality as the first rendering function, the graphics rendering process of the page frame of the mini program is transferred to the APP client for implementation while ensuring normal implementation of graphics rendering functionality. Therefore, the browser merely serves as an executor of the service logic code, which can significantly reduce memory consumption of the browser, reduce a possibility of force close of the browser process, and finally reduce a risk of force close of the mini program, thereby improving running stability of the mini program.

### BRIEF DESCRIPTION OF THE DRAWINGS

FIG. 1 is a schematic diagram of rendering a page frame of a mini program.
FIG. 2 is a schematic architectural diagram of a page rendering system according to an embodiment of this application.
FIG. 3 is a schematic structural diagram of a terminal in FIG. 2 according to an embodiment of this application.
FIG. 4 is a first schematic flowchart of a page rendering method according to an embodiment of this application.
FIG. 5 is a second schematic flowchart of a page rendering method according to an embodiment of this application.
FIG. 6 is a third schematic flowchart of a page rendering method according to an embodiment of this application.
FIG. 7 is a schematic principle diagram of rendering a game screen of a mini game according to an embodiment of this application.
FIG. 8 is a schematic diagram of recording calling of a WebGL function according to an embodiment of this application.
FIG. 9 is another schematic diagram of recording a calling of a WebGL function according to an embodiment of this application.

### DETAILED DESCRIPTION

To make objectives, technical solutions, and advantages of this application clearer, this application is described below in further detail with reference to drawings. The described embodiments are not to be considered as a limitation on this application. All other embodiments obtained by a person of ordinary skill in the art without creative efforts fall within the protection scope of this application.

In the following description, a term "some embodiments" describes subsets of all possible embodiments, but "some embodiments" may be the same subset or different subsets of all of the possible embodiments, and may be combined with each other if no conflict exists.

In the following description, a term "first/second" is merely configured for distinguishing between similar objects and does not represent a specific order of objects. "First/second" may be transposed at a specific order or a sequence when allowed, so that the embodiments of this application described herein can be implemented in an order other than those illustrated or described herein.

In the embodiments of this application, a term "module" or "unit" refers to a computer program or a part of a computer program that has a preset function and operates with other related parts to implement a preset target, which may be completely implemented or partially implemented by using software, hardware (for example, a processing circuit or a memory), or a combination thereof. Similarly, one processor (or a plurality of processors or memories) may be configured to implement one or more modules or units. In addition, each module or unit may be a part of an entire module or unit including functions of the module or the unit.

Unless otherwise defined, meanings of all technical and scientific terms used in this specification are the same as those usually understood by a person skilled in the art of this application. Terms used herein are merely intended to describe the embodiments of this application, and are not intended to limit this application.

Before the embodiments of this application are further described in detail, a description is made on nouns and terms in the embodiments of this application, and the nouns and terms in the embodiments of this application are applicable to the following explanations.
1) Mini program: It is also referred to as web program, which is a program that is developed based on a front-end-oriented language (e.g., JavaScript) and configured to implement services in a hypertext markup language (HTML) page, and is software to be downloaded by a client through a network (e.g., the Internet) and interpreted and executed in a browser or an embedded browser of the client. It does not need to be installed in the client. For example, a mini program implementing a check-in function or a game service may be downloaded into and run in a social network client.
2) Client: It is an application (APP) that needs to be downloaded and installed on a terminal (e.g., a smartphone) by a user before use, for example, a browser client or a social network client.
3) Client process: It is a process allocated by a terminal to a client for implementing various functions of the client.
4) Embedded browser (WebView): It is a browser embedded in a native APP (an APP that can be directly run in an operating system). A native APP can use the embedded browser to display a web page. Different operating systems employ different embedded browsers. For example, some operating systems may use UIW eb View and WKWebview to display a web page.
5) Browser process: It is a process allocated by a terminal to an embedded browser for implementing various functions of the browser process.
6) Page frame: It is a unit for rendering and displaying screen content of a mini program. In other words, the screen content of the mini program is subjected to page rendering page frame by page frame and displayed page frame by page frame, thus dynamically presenting the screen content of the mini program through continuous display of a plurality of page frames.
7) In response to: It is configured for indicating a condition or a state on which a to-be-performed operation depends. When the condition or the state is met, one or more to-be-performed operations may be real-time or may have a set delay. Unless otherwise specified, a sequence in which a plurality of operations are performed is not limited.
8) Rendering function: It is a function configured for defining and describing how a page is displayed in web development or mini program development. It is typically responsible for converting data into a visualized HTML structure and presenting the data on a user interface. Implementations and concepts of a page rendering function in different frameworks and platforms may be different, but have similar core purposes, that is, to define display logic of a page.
9) Command buffer: It is a buffer space configured for storing calling information of a rendering function.
10) Service logic code: It is code configured for implementing service logic. In the embodiments of this application, it refers to service logic code of a mini program, which is a code portion configured for implementing various functions and interactions in the mini program. The code may include functions such as login verification, page turn, data requesting and processing, and component operation. Generally speaking, service logic code of a mini program mainly includes the following.
   1. Page life cycle function: Each page in a mini program has a life cycle function, including callback functions for different stages such as page loading, page display, page hiding, and page unloading. Various logical operations may be performed in these functions.
   2. Data requesting and processing: When a mini program needs to perform data exchange with a server, the mini program transmits a request and processes returned data though a built-in method, including operations such as data parsing and data display.
   3. Event monitoring and processing: A page in a mini program can monitor various user interaction events, such as a click/tap event, a swipe event, and an input event. Corresponding service logic can be implemented through an event processing function.
   4. Page turn and parameter transmission: When page turn is required in a mini program, the page turn may be achieved through a built-in application programming interface (API), and data may be transmitted through parameters.
   5. Component operation: In a mini program, different functions of a page may be implemented through various built-in components and custom components, and operations such as component display, component hiding, and component styling may be controlled through a related API.

Overall, service logic code of a mini program is a code portion responsible for implementing various functions and interactions of the mini program. Through the code, various complex logic and interactive effects of the mini program can be implemented.

A mini program is an APP that can be used without being downloaded or installed, which can provide users with significant convenience when using different APPs. For example, a user may perform attendance check-in through a mini program without installing a corresponding client, or may engage in gaming and entertainment through a mini program without installing a corresponding client.

In the related art, running of a mini program is implemented by means of an embedded browser (e.g., WebView). To be specific, service logic code of the mini program is interpreted and executed through the browser process, and a graphics rendering function is called through the browser process, to render a page frame of the mini program.

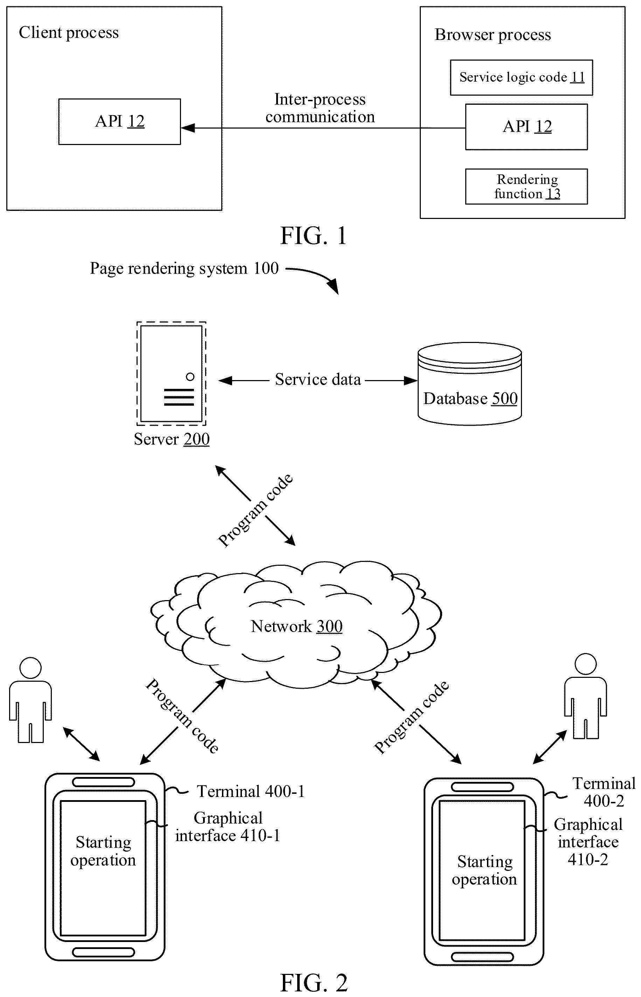

Exemplarily, FIG. 1 is a schematic diagram of rendering a page frame of a mini program. Referring to FIG. 1, code of a mini program is typically divided into service logic code 11 (i.e., code written by a creator of the mini program for implementing functions of the mini program), an API 12 configured for calling a client, and a calling interface of a rendering function 13. The rendering function 13 is configured for rendering a page frame of the mini program. When the client detects a starting operation for the mini program, a client process starts a browser process of an embedded browser of an operating system. The browser process executes the service logic code 11, calls the rendering function 13, and calls the client process through the API 12 to perform file reading/writing, information logging, and the like.

However, in this manner, as a duration of using the mini program increases, a quantity of page frames to be rendered increases, which causes high memory occupation of the embedded browser, resulting in force close of the browser process by the terminal. Therefore, the mini program cannot be further used. Therefore, the related technology of using the browser process to render the page frame of the mini program results in a relatively high risk of force close of the mini program.

In addition, the embedded browser may be upgraded with an operating system of the terminal (i.e., when the operating system is upgraded, the embedded browser may be upgraded accordingly). However, the upgrading of the embedded browser may bring some running bugs, which may result in bugs during rendering of a page frame of the mini program through the browser process. Therefore, the mini program cannot be used normally.

The embodiments of this application provide a page rendering method and apparatus, a device, a computer-readable storage medium, and a computer program product, which can reduce a risk of force close of a mini program. An exemplary application of an electronic device for page rendering provided in the embodiments of this application is described below. The electronic device provided in the embodiments of this application may be implemented as various types of terminals such as a notebook computer, a tablet computer, a desktop computer, a set-top box, a mobile device (e.g., a mobile phone, a portable music player, a personal digital assistant, a dedicated messaging device, or a portable game device), or may be implemented as a server. An exemplary application in which the electronic device is implemented as a terminal is described below.

FIG. 2 is a schematic architectural diagram of a page rendering system according to an embodiment of this application. To support a page rendering application, in a page rendering system 100, terminals (a terminal 400-1 and a terminal 400-2 are exemplified) are connected to a server 200 through a network 300. The network 300 may be a wide area network, a local area network, or a combination of both. In the page rendering system 100, a database 500 is further arranged to provide data support to the server 200. The database 500 may be independent of the server 200, or may be arranged in the server 200. FIG. 2 shows a case where the database 500 is independent of the server 200.

The terminal 400-1 and the terminal 400-2 are respectively configured to: download program code of a mini program from the server 200 and start a browser process of a browser through a client process and execute the service logic code in the program code of the mini program through the browser process in response to a starting operation performed by a user on the mini program on a graphical interface 410-1 and a graphical interface 410-2; transmit a calling processing request to the client process through the browser process in response to the service logic code calling a first rendering function for a page frame of the mini program, the first rendering function being a graphics rendering function that may be called by the browser process; determine a second rendering function corresponding to the first rendering function and call the second rendering function through the client process in response to the calling processing request, the second rendering function being a graphics rendering function that may be called by the client process; perform graphics rendering on the page frame of the mini program through the second rendering function, to obtain a rendering result of the page frame of the mini program; and display a rendering result of each page frame on the graphical interface 410-1 and the graphical interface 410-2 sequentially.

The server 200 is configured to deliver the program code of the mini program to the terminal 400-1 and the terminal 400-2.

This embodiment of this application may be implemented by using a cloud technology. The cloud technology refers to a hosting technology that unifies a series of resources such as hardware, software, and a network in a wide area network or a local area network to implement calculation, storage, processing, and sharing of data.

The cloud computing is a collective name of a network technology, an information technology, an integration technology, a management platform technology, an application technology, and the like based on application of a cloud computing business model. The technologies may form a resource pool for use on demand, which is flexible and convenient. A cloud computing technology becomes an important support. Backend services of the technical network system require a huge amount of computing and storage resources, which need to be implemented through cloud computing.

Exemplarily, the server 200 may be an independent physical server, or may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal 400-1 and the terminal 400-2 each may be a smartphone, a tablet computer, a notebook computer, a desktop computer, a smart speaker, a smart watch, a smart household appliance, or an on-board terminal, but are not limited thereto. The terminals and the server may be connected directly or indirectly through wired or wireless communication, which is not limited in this embodiment of this application.

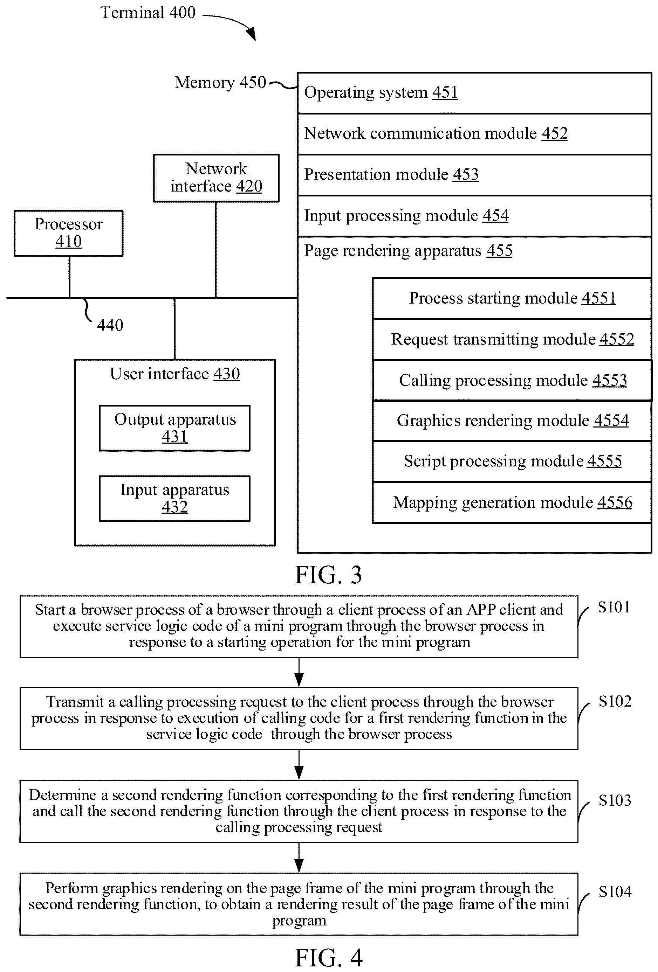

FIG. 3 is a schematic structural diagram of a terminal (an implementation of an electronic device) in FIG. 2 according to an embodiment of this application. A terminal 400 shown in FIG. 3 includes at least one processor 410, a memory 450, at least one network interface 420, and a user interface 430. Various components in the terminal 400 are coupled together through a bus system 440. The bus system 440 is configured to implement connection and communication between the components. In addition to a data bus, the bus system 440 further includes a power bus, a control bus, and a state signal bus. However, for clarity, various buses are marked as the bus system 440 in FIG. 3.

The processor 410 may be an integrated circuit chip with a signal processing capability, for example, a general-purpose processor, a digital signal processor (DSP), another programmable logic device, a discrete gate, a transistor logic device, or a discrete hardware component. The general-purpose processor may be a microprocessor, any conventional processor, or the like.

The user interface 430 includes one or more output apparatuses 431 that can present media content, including one or more speakers and/or one or more visual displays. The user interface 430 further includes one or more input apparatuses 432, including user interface components that facilitate user input, such as a keyboard, a mouse, a microphone, a touch display, a camera, and another input button and control.

The memory 450 may be removable, non-removable, or a combination thereof. An exemplary hardware device includes a solid-state memory, a hard disk driver, an optical disk driver, and the like. In some embodiments, the memory 450 includes one or more storage devices that are physically away from the processor 410.

The memory 450 includes a volatile memory or a non-volatile memory, or may include both the volatile memory and the non-volatile memory. The non-volatile memory may be a read-only memory (ROM), and the volatile memory may be a random access memory (RAM). The memory 450 described in the embodiments of this application is intended to include any suitable type of memory.

In some embodiments, the memory 450 can store data to support various operations. Examples of the data include a program, a module, and a data structure, or a subset or a superset thereof. An exemplary description is provided below.

An operating system 451 includes system programs configured to process various basic system services and perform hardware-related tasks, for example, a frame layer, a core library layer, and a driver layer, which are configured to implement various basic services and process hardware-based tasks.

A network communication module 452 is configured to reach another computing device through one or more (wired or wireless) network interfaces 420. Exemplary network interfaces 420 include: Bluetooth, wireless fidelity (Wi-Fi), a universal serial bus (USB), and the like.

A presentation module 453 is configured to enable presentation of information through one or more output apparatuses 431 (e.g., a display and a speaker) associated with the user interface 430 (e.g., a user interface configured to operate a peripheral device and display content and information).

An input processing module 454 is configured to detect one or more user inputs or interactions from one of the one or more input apparatuses 432 and translate the detected inputs or interactions.

In some embodiments, the page rendering apparatus provided in the embodiments of this application may be implemented by software. FIG. 3 shows a page rendering apparatus 455 stored in the memory 450, which may be software in a form of a program and a plug-in, and includes the following software modules: a process starting module 4551, a request transmitting module 4552, a calling processing module 4553, a graphics rendering module 4554, a script processing module 4555, and a mapping generation module 4556. These modules are logical, and therefore may be combined in different manners or further split based on functions to be implemented. Functions of the modules are described below.

In some embodiments, the page rendering apparatus provided in the embodiments of this application may be implemented by hardware. In an example, the page rendering apparatus provided in the embodiments of this application may be a processor in a form of a hardware decoding processor, which is programmed to perform the page rendering method provided in the embodiments of this application. For example, the processor in the form of the hardware decoding processor may be one or more ASICs, a DSP, a programmable logic device (PLD), a complex programmable logic device (CPLD), a field-programmable gate array (FPGA), or another electronic element.

In some embodiments, the terminal or the server (both are possible implementations of the electronic device) may implement the page rendering method provided in the embodiments of this application by running a computer program. For example, the computer program may be a native program or a software module in an operating system; or may be a native APP, i.e., a program that needs to be installed in the operating system for running, such as a social network APP or an instant messaging APP; or may be a mini program, which can be run after being downloaded into a browser environment; or may be a mini program that can be embedded in any APP. In summary, the foregoing computer program may be an APP, a module, or a plug-in of any form.

The embodiments of this application may be applied to a page rendering scenario of a mini program in APP software, an operating system, and the like. Next, the page rendering method provided in the embodiments of this application are described. As described above, the electronic device implementing the page rendering method of the embodiments of this application may be a terminal, a server, or a combination of both. Therefore, an execution subject of each operation is not repeated below.

The page rendering method provided in the embodiments of this application is described in combination with exemplary applications and implementations of the electronic device provided in the embodiments of this application.

FIG. 4 is a first schematic flowchart of a page rendering method according to an embodiment of this application. A description is provided in combination with operations shown in FIG. 4.

S101: Start a browser process of a browser through a client process of an APP client and execute service logic code of a mini program through the browser process in response to a starting operation for the mini program.

This embodiment of this application is implemented in a scenario of performing graphics rendering on a page frame of a mini program. The page frame subjected to the graphics rendering is configured for presenting screen content of the mini program. In this embodiment of this application, the electronic device detects in real time whether a starting operation for the mini program is received. When the starting operation for the mini program is received, running of the mini program is triggered, and then the browser process of the browser is started through the client process of the APP client, and the service logic code of the mini program is interpreted and executed through the browser process, thereby implementing the service function of the mini program.

The mini program in this embodiment of this application may be various other types of mini programs such as a mini program of games (which may also be referred to as a mini game), a mini program of office software, or a mini program of music, which is not limited in this embodiment of this application.

In this embodiment of this application, the client process refers to a process of a client of an APP in which a mini program is embed, i.e., the mini program is run in the APP client. Therefore, the starting operation for the mini program refers to an operation triggered on the APP client (which is referred to as a client for short below) to enter the mini program. The starting operation may be implemented through clicking/tapping of an icon of the mini program, scanning of a QR code of the mini program, or the like. The foregoing APP may refer to a social network APP, a music APP, a game APP, or the like. Therefore, the client may be a social network client, a music client, a game client, or the like. The mini program may be embedded and run in these clients to provide functions of the mini program to users who have installed these clients.

The browser in this embodiment of this application may be a browser provided by the client or an embedded browser provided by the operating system of the electronic device, which is not limited in this embodiment of this application. The browser process refers to a process allocated by the electronic device for the browser. It may be understood that when the browser is the embedded browser provided by the operating system of the electronic device, the operation of starting a browser process of a browser through a client process of an APP client in S101 is an optional operation, i.e., can be omitted.

The service logic code of the mini program is code configured for implementing specific functions of the mini program, which is usually written by a creator of the mini program. The service logic code of the mini program is pulled by the client from a server when the mini program is started for the first time, or may be extracted from a cache file of the client when the mini program is started for a non-first time.

S102: Transmit a calling processing request to the client process through the browser process in response to execution of calling code for a first rendering function in the service logic code through the browser process.

To display the screen content of the mini program, the service logic code calls the first rendering function to render page frames of the mini program one by one or in parallel. The first rendering function is a graphics rendering function able to be called by the browser process (i.e., the first rendering function is a browser-side graphics rendering function), and the service logic code is executed through the browser process. When the execution through the browser process reaches the calling code for the first rendering function in the service logic code, which means that the browser process has executed the calling code for the first rendering function, if the first rendering function is called through the browser process for page rendering, force close of the browser process is caused as a result of the browser occupying a large memory when calling the first rendering function through the browser process for page rendering. To avoid the situation, in this embodiment of this application, the electronic device forwards the function calling for page rendering in the browser process to the client process through the calling processing request in response to the execution of the calling code for the first rendering function in the service logic code through the browser process, to implement the function calling for page rendering through the client. Thus, the browser may be merely regarded as an executor of the service logic code, and only needs to load few pages, which can reduce the memory consumption of the browser.

In this embodiment of this application, the browser process may transmit the calling processing request to the client process in a plurality of manners.

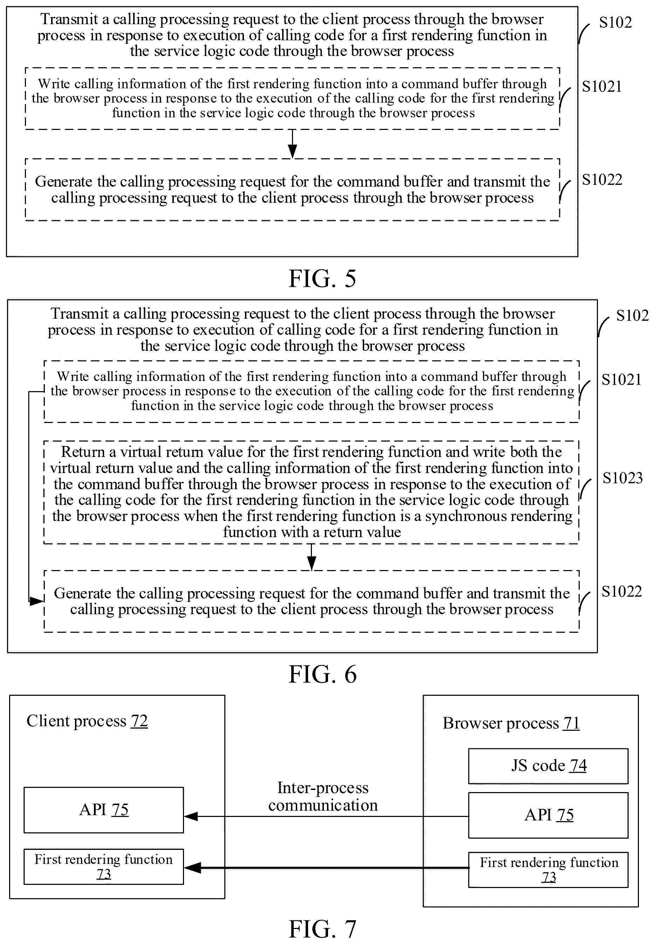

FIG. 5 is a second schematic flowchart of a page rendering method according to an embodiment of this application. In some embodiments of this application, the process of S102 "transmit a calling processing request to the client process through the browser process in response to execution of calling code for a first rendering function in the service logic code through the browser process" in FIG. 4 may be implemented through S1021 to S1022 as follows:
S1021: Write calling information of the first rendering function into a command buffer through the browser process in response to the execution of the calling code for the first rendering function in the service logic code through the browser process.

When the electronic device executes reaching the calling code for the first rendering function in the service logic code, the electronic device writes the calling information of the first rendering function into the command buffer through the browser process, so as to record the calling of the first rendering function through the command buffer. The browser process may write calling information of first rendering functions called for all page frames into the same command buffer, or may write calling information of each first rendering function into a command buffer allocated thereto (to be specific, the browser process allocates a command buffer for each first rendering function, and writes only calling information of the first rendering function corresponding to each command buffer into the command buffer).

In this embodiment of this application, the calling information of the first rendering function needs to include at least a function identifier of the first rendering function and a calling parameter of the first rendering function (which may also be understood as an input parameter of the first rendering function). The function identifier is configured for distinguishing between different first rendering functions. The function identifier may be a function name of the first rendering function or the function label of the first rendering function. The calling parameter of the first rendering function may vary depending on a specific rendering function of the first rendering function. For example, when the first rendering function is a graphics drawing function, the calling parameter of the first rendering function is a coordinate of each point of a graphic; and when the first rendering function is a shader function, the calling parameter of the first rendering function is color code.

In this embodiment of this application, the command buffer may be created by the browser process, or may be created by the client process and injected into the browser process.

In some embodiments, before S1021 "write calling information of the first rendering function into a command buffer through the browser process in response to the execution of the calling code for the first rendering function in the service logic code through the browser process" in FIG. 5, the method may further include the following processing: generating script code of the command buffer and injecting the script code of the command buffer into the browser process through the client process.

The script code of the command buffer is configured for creating the command buffer and controlling the browser process to write the calling information of the first rendering function into the command buffer. To be specific, the client process generates a piece of automatically executable script code, which is configured for creating a readable and writable command buffer, intercepting the calling of the first rendering function, and controlling the browser process to record the corresponding calling information. The injecting the script code of the command buffer into the browser process may be implemented by creating a thread in the browser process and causing the thread to execute the script code of the command buffer, or may be implemented by generating an executable file corresponding to the script code and using the executable file to replace the calling code (or code segment) for the first rendering function in the browser process with the executable file, that is, replacing the calling code for the first rendering function with the executable file.

S1022: Generate the calling processing request for the command buffer and transmit the calling processing request to the client process through the browser process.

After the electronic device writes the calling information of the first rendering function into the command buffer through the browser process, the electronic device generates the calling processing request for the first rendering function through the browser process, packages the command buffer having the calling information written therein into the calling processing request, and transmits the calling processing request to the client process through inter-process communication. That is, the calling processing request includes the command buffer with the calling information of the first rendering function. Thus, after receiving the calling processing request, the client process can parse the calling processing request to obtain the command buffer, so as to obtain the calling information of the first rendering function.

In this embodiment of this application, the electronic device may immediately generate the calling processing request for the command buffer and transmit the calling processing request to the client process through the browser process after the browser process writes the calling information of the first rendering function into the command buffer, or may generate the calling processing request for the command buffer and transmit the calling processing request to the client through the browser process when a specific request transmitting condition is met (i.e., when the calling processing request needs to be transmitted) after the browser process writes the calling information of the first rendering function into the command buffer.

The request transmitting condition may be that the first rendering function is a synchronous rendering function with a return value (e.g., a gl.creatBuffer function), or may be that calling information of all first rendering functions called for the page frames has been recorded in the command buffer, which is not limited in this embodiment of this application.

In some embodiments, S1022 "generate the calling processing request for the command buffer and transmit the calling processing request to the client process through the browser process" in FIG. 5 may be implemented through the following processing: generating the calling processing request for the command buffer and transmitting the calling processing request to the client process through the browser process when the first rendering function called by the service logic code is a synchronous rendering function with a return value.

The synchronous rendering function can be further run only after the return value is obtained. The synchronous rendering function remains in a paused state before the return value is obtained. Therefore, when the first rendering function is a synchronous rendering function with a return value, the command buffer is promptly submitted to the client process, so that the client process generates and returns the corresponding return value for the first rendering function, thereby enabling further execution of the first rendering function.

In some other embodiments, S1022 "generate the calling processing request for the command buffer and transmit the calling processing request to the client process through the browser process" in FIG. 5 may be implemented through the following processing: generating the calling processing request for the command buffer and transmitting the calling processing request to the client process through the browser process when calling information of a plurality of first rendering functions to be called during rendering of the page frame is recorded in the command buffer.

The inter-process communication needs to consume a specific time for completion, and for a single page frame, a plurality of (e.g., dozens or hundreds of) first rendering functions may need to be called to complete graphics rendering. All these first rendering functions may be considered as the first rendering function that needs to be called during rendering of the page frame. The electronic device generates the calling processing request for the command buffer and transmit the calling processing request to the client process through the browser process only when the calling information of all of the first rendering functions has been recorded in the command buffer. Thus, calling of all of the first rendering functions required for the single page frame can be submitted to the client process in batch, thereby reducing a quantity of times of inter-process communication and improving processing efficiency of the page frame during graphics rendering.

In this embodiment of this application, transmitting the calling processing request to the client process may be implemented through an XMLHttpRequest (XHR) or based on technologies such as a WebSocket protocol, which is not limited in this embodiment of this application.

In some embodiments, the transmitting the calling processing request to the client process may be implemented through the following processing: setting an access address of the calling processing request to a service address of the client process through the browser process; and intercepting the calling processing request at the service address through the client process, to complete the transmission of the calling processing request to the client process.

To be specific, the browser process directly uses the service address of the client process as the access address of the calling processing request, and then the client process may intercept the request transmitted from the browser process at the service address through a request interception control (e.g., a WKURLSchemeHandler control), to achieve inter-process communication between the browser process and the client process, thereby completing the transmission of the calling processing request.

S103: Determine a second rendering function corresponding to the first rendering function and call the second rendering function through the client process in response to the calling processing request.

The electronic device responds to the calling processing request through the client process, to determine the second rendering function that has the same graphics rendering functionality as the first rendering function. The second rendering function is a graphics rendering function that able to be called by the client process (i.e., the second rendering function is a client-side graphics rendering function). Subsequently, the electronic device calls the second rendering function through the client process, to convert the calling of the first rendering function into calling of the second rendering function, so as to facilitate subsequent implementation of the rendering the page frame of the mini program through the second rendering function. Herein, the page frame of the mini program is rendered through the second rendering function, to obtain a rendering result of the page frame of the mini program.

In other words, in this embodiment of this application, the first rendering function and the second rendering function can implement the same graphics rendering functionality, except that they are called in different manners. The graphics rendering functionality refers to the implementation of graphics rendering operations corresponding to pipeline stages, such as buffer creation, vertex data upload, and shader compilation. For example, if the first rendering function is a function for creating buffer objects (e.g., a creatBuffer function in WebGL), the second rendering function is also a function for creating buffer objects (e.g., a function for creating buffer objects in OpenGL).

The second rendering function may be selected based on the function of the first rendering function through the client process from existing graphics rendering functions able to be called by the client process. During implementation, a correspondence table between graphics rendering functions able to be called by the browser process and graphics rendering functions able to be called by the client process may be pre-established, each of the graphics rendering functions able to be called by the browser process has the same graphics rendering functionality as a respective one of the second graphics rendering functions able to be called by the client process, and then the second rendering function corresponding to the first rendering function may be queried from the correspondence table. In some embodiments, the second rendering function may be obtained by the client process through conversion and rewriting of the first rendering function, which is not limited in this embodiment of this application.

In this embodiment of this application, when the calling information includes a calling parameter, the calling the second rendering function may be implemented through the following processing: parsing the command buffer to obtain the calling parameter of the first rendering function and converting the calling parameter of the first rendering function into a calling parameter of the second rendering function through the client process; and transmitting the calling parameter of the second rendering function to the second rendering function to complete the calling of the second rendering function through the client process.

Through the client process, the electronic device parses the calling processing request to obtain the command buffer, parses the command buffer to obtain the calling parameter of the first rendering function, converts the calling parameter into the calling parameter that may be used for the second rendering function, and finally transmits the converted calling parameter as the input parameter of the second rendering function to the second rendering function, so as to complete the calling of the second rendering function. For example, when the calling parameter of the first rendering function is each coordinate point of a to-be-drawn graphic, the electronic device converts the coordinate point through the client process based on a parameter format of the second rendering function, and inputs a conversion result into the second rendering function to complete the calling.

The conversion of the calling parameter of the first rendering function into the calling parameter used for the second rendering function may be performed with reference to official documentation and guidelines corresponding to the second rendering function, to ensure correct understanding and use of parameters of different functions and their meanings. Calling parameters in the first rendering function and the second rendering function that need to be converted are compared one by one, differences and similarities between corresponding parameters are determined, and proper modifications and adjustments are made. Moreover, order of the calling parameters in the first rendering function and the second rendering function may differ slightly. To ensure correct order of parameter transmission, the converted calling parameters need to be arranged based on a function parameter sequence required for the second rendering function, to ensure that the second rendering function can be run normally and achieve the same graphics rendering effect.

### Implementation example: creating a buffer object

### 1. Browser-side rendering function (the first rendering function-WebGL)

Functionality: creates and initializes a vertex buffer object on the browser side.

Internal structure and parameters are as follows.

Input parameters include vertex data: a floating-point array containing model vertex coordinates (e.g., [x1, y1, z1, x2, y2, z2, ...]); and usage mode: specifies the buffer update frequency (e.g., static or dynamic rendering).

Internal process flow includes: requesting a buffer object identifier via the browser's graphics API; uploading vertex data from JavaScript memory to graphics processing unit (GPU) memory and binds it to the buffer object; and configuring the buffer's purpose (e.g., ARRAY _BUFFER) and declares data format (e.g., three floats per vertex).

Output includes returning a logical identifier for the buffer object for subsequent rendering operations; and returning an error state if unsuccessful (e.g., insufficient memory or API limitations).

### 2. Client-side rendering function (the second rendering function-OpenGL)

Functionality: creates and initializes an equivalent vertex buffer object on the client side.

Internal structure and parameters are as follows.

Input parameters include vertex data: the same floating-point array as the browser side, converted into a client-compatible format (e.g., C++ std::vector<float>); and usage mode: mapped to the client's graphics API enumeration (e.g., OpenGL's GL_STATIC_DRAW).

Internal process flow includes generating a buffer object using the native graphics API (e.g., OpenGL's glGenBuffers); copying vertex data from client memory to GPU memory, explicitly specifying data size and pointer; and setting the buffer binding target and data type, consistent with the browser-side declaration.

Output includes returning a buffer object handle (e.g., OpenGL's GLuint); and that error handling checks GPU driver status (e.g., glGetError).

### Implementation example: shading operation

### 1. Browser-side rendering function (the first rendering function-WebGL)

Functionality: applies shading effects (e.g., base color + lighting) to a model.

Internal structure and parameters are as follows.

Input parameters include shader program: a WebGL program object containing vertex and fragment shaders; color parameters: the model's base color in RGBA format; and lighting parameters: light direction vector and intensity values.

Internal process flow includes activating the shader program and binding it to the current rendering pipeline; passing color and lighting parameters to the shader via Uniform variables; and validating shader variable binding status (e.g., checks gl.getUniformLocation).

Output: no explicit return value, but subsequent draw calls apply this shading state; and triggers a WebGL error callback if parameters are invalid.

### 2. Client-side rendering function (the second rendering function-OpenGL)

Functionality: applies equivalent shading effects on the client side.

Internal structure and parameters are as follows.

Input parameters include shader program: a client-compiled shader program handle (e.g., OpenGL's GLuint program); color parameters: converted to the client API's format (e.g., four floats for OpenGL's glUniform4f); and lighting parameters: aligned with the native API's data layout (e.g., vector as GLfloat[3]).

Internal process flow includes binding the shader program to the current rendering context; seting parameters via native Uniform interfaces (e.g., OpenGL's glUniform* functions); and verifying shader variable locations and transmission status (e.g., checks glGetUniformLocation).

Output: no direct output, but logs potential errors (e.g., shader linkage failure or missing Uniforms).

S104: Perform graphics rendering on the page frame of the mini program through the second rendering function, to obtain a rendering result of the page frame of the mini program.

The electronic device performs graphics rendering processing on each page frame of the mini program through the second rendering function, for example, performs pattern drawing and shading on each page frame. After the graphics rendering is completed, a rendering result of each page frame can be obtained.

In the related art, a graphics rendering function is called through a browser process to render a page frame of a mini program, which results in excessively high memory occupation by a browser, leading to a relatively high risk of force close of the mini program. However, in the embodiments of this application, when a user starts a mini program, the electronic device starts the browser process through the client process, executes the service logic code of the mini program through the browser, and transmits the calling processing request to the client process through the browser process when the service logic code needs to call the first rendering function, so as to convert the calling performed by the browser process on the first rendering function into the calling performed by the client process on the second rendering function through the calling processing request, and performs the graphics rendering on the page frame of the mini program through the second rendering function. In this way, the graphics rendering process of the page frame of the mini program can be transferred to the client for implementation. Therefore, the browser merely serves as an executor of the service logic code without requiring a resource overhead for calling a graphics processor, which can significantly reduce the memory consumption of the browser, reduce a possibility of force close of the browser process, and finally reduce a risk of force close of the mini program. In addition, because the graphics rendering process of the page frame of the mini program is transferred to the client for implementation, the browser and the graphics rendering of the page frame of the mini program are unbundled. Therefore, even if upgrading of the browser causes running bugs, no impact is generated on the graphics rendering of the page frame of the mini program, so that normal use of the mini program can be ensured.

In the forgoing solution, when the first rendering function is a synchronous rendering function with a return value, the browser process immediately transmits the calling processing request having the command buffer incorporated therein to the client process to implement submission of the command buffer, and resumes subsequent execution only after obtaining the return value. It may be learned that because this manner requires waiting for the return value, some time is spent before calling information of subsequent first rendering functions can be written into the command buffer and the command buffer can be submitted, which affects running efficiency.

In view of the above, FIG. 6 is a third schematic flowchart of a page rendering method according to an embodiment of this application. In some embodiments of this application, before S1022 "generate the calling processing request for the command buffer and transmit the calling processing request to the client process through the browser process" in FIG. 5, the method may further include the following processing:
S1023: Return a virtual return value for the first rendering function and write both the virtual return value and the calling information of the first rendering function into the command buffer through the browser process in response to the execution of the calling code for the first rendering function in the service logic code through the browser process when the first rendering function is a synchronous rendering function with a return value.

To be specific, when the first rendering function is a synchronous rendering function with a return value, the electronic device first generates the virtual return value for the first rendering function through the browser process and returns the virtual return value to the first rendering function, so that the first rendering function can be further run. Thus, the browser process does not need to wait for the return value of the first rendering function and can further record calling information of other subsequent first rendering functions. After recording of calling information of all first rendering functions is completed for the page frame, the command buffer is submitted to the client process in batch. The virtual return value may be randomly generated by the browser process based on a format of the return value of the first rendering function, or may be a historical return value of the first rendering function, which is not limited in this embodiment of this application.

To ensure that the client process can correctly convert the calling of the first rendering function into the calling of the second rendering function subsequently, the electronic device writes the calling information (i.e., the function identifier, the calling parameter, etc.) and the virtual return value of the first rendering function into the command buffer through the browser process, so that the client process can subsequently parse the command buffer to obtain the calling information and the virtual return value of the first rendering function.

When the virtual return value of the first rendering function exists in the command buffer, in some embodiments of this application, after the performing graphics rendering on the page frame of the mini program through the second rendering function, to obtain a rendering result of the page frame of the mini program, the method further includes: parsing the calling processing request to obtain the command buffer and extracting the virtual return value from the command buffer through the client process; and using a return value of the second rendering function as a real return value of the first rendering function and establishing a mapping relationship between the real return value and the virtual return value through the client process.

The mapping relationship is configured for determining a corresponding real return value for the virtual return value in the command buffer in the future.

In this embodiment of this application, because the calling of the first rendering function is converted into the calling of the second rendering function, the second rendering function has the same functionality as the first rendering function. Therefore, the return value of the second rendering function may be used as the real return value of the first rendering function. For example, when the functionality of the first rendering function is creating buffer area objects, the functionality of the second rendering function is also creating buffer area objects. Therefore, the return value of the second rendering function may be an identifier of a buffer area object (e.g., bufferID), and the return value of the first rendering function is also an identifier of a buffer area object. Therefore, through the client process, the electronic device directly determines the return value of the second rendering function as the real return value of the first rendering function, and binds the real return value and the virtual return value by establishing the mapping relationship between the real return value and the virtual return value. Thus, when the browser process transmits another virtual return value to the client process for the first rendering function in the future, the client process can directly determine the real return value for the first rendering function through the mapping relationship for execution of subsequent functions.

Next, an exemplary application of the embodiments of this application in an actual application scenario is described.

The embodiments of this application are implemented in a scenario of rendering a game screen (referred to as a page frame) of a mini game (referred to as a mini program). In the embodiments of this application, the rendering of the game screen of the mini game is switched from WebView (referred to as a browser) to a client of a social application.

FIG. 7 is a schematic principle diagram of rendering a game screen of a mini game according to an embodiment of this application. Referring to FIG. 7, in this embodiment of this application, calling of a first rendering function 73 (exemplarily, the first rendering function may be a WebGL function) in a browser process 71 (also referred to as a WebView process) is forwarded to a client process 72 for implementation through inter-process communication, but service logic code, i.e., JS code 74, of the mini game is still run in the browser process 71, and the client process 72 is called through an API 75 to perform file reading/writing, information login, and the like.

However, the WebGL function has numerous interfaces, and the JS code may need to perform dozens or even hundreds of times of calling for each frame of the game screen. If each calling of the WebGL function needs to be forwarded to the client process through inter-process communication for implementation, rendering performance of the game screen of the mini game is extremely poor. Therefore, in this embodiment of this application, the calling of the WebGL function is recorded in the command buffer through the browser process. When submission is required, the calling of the WebGL function is submitted to the client process in batch through inter-process communication for batch processing.

In an implementation, the client process injects script code of the command buffer into the browser process. The script code is configured for intercepting the calling of the WebGL function by the JS code and recording the calling of the WebGL function into the command buffer.

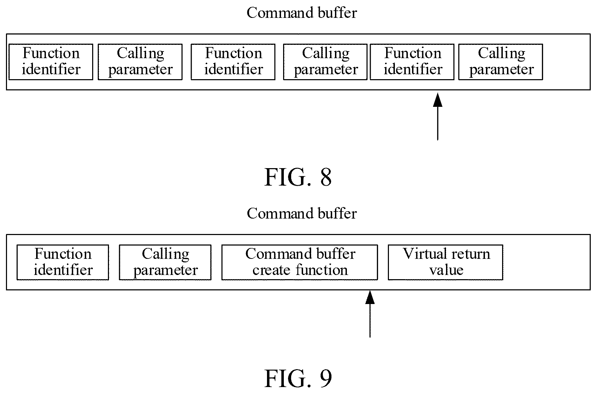

Exemplarily, FIG. 8 is a schematic diagram of recording calling of a WebGL function according to an embodiment of this application. When the JS code executes a WebGL function, the browser process writes calling of the WebGL function, i.e., a function ID (referred to as a function identifier) and a calling parameter of the WebGL function, into the command buffer for subsequent batch submission.

When a frame ends or when calling of a synchronous function (referred to as a synchronous rendering function) is required, the command buffer needs to be submitted to the client process. In this embodiment of this application, the command buffer may be converted into binary data, to implement inter-process communication by using an XHR. To be specific, the browser process incorporates the data of the command buffer in the XHR and submit the XHR to the client process, and the client process intercepts the XHR (referred to as a calling processing request) through WKURLSchemeHandler. Certainly, the inter-process communication may alternatively be implemented through WebSocket, Prompt, postMessage, or the like.

Normally, during calling of a synchronous function with a return value, for example, during calling of gl.createBuffer, the browser process submits the command buffer once and waits for the return value, in which case rendering efficiency is not high. In this embodiment of this application, during calling of a synchronous function with a return value, the calling may be written into the command buffer without triggering synchronous submission. In this case, during the calling of the synchronous function, the browser process returns a fake BufferID (referred to as a virtual return value) and write both the fake BufferID and the function calling into the command buffer. After the client process parses the command buffer and generates a real BufferID (referred to as a real return value), the client maps the real BufferID to the fake BufferID. Subsequently, when the browser process transmits the fake BufferID again, the client process may directly replace the fake BufferID with the real BufferID based on the mapping relationship to achieve the function.

Exemplarily, FIG. 9 is another schematic diagram of recording a calling of a WebGL function according to an embodiment of this application. In the command buffer, not only function identifiers (i.e., function IDs) and calling parameters of some WebGL functions without a return value are recorded, but also a virtual return value (i.e., a fake BufferID) is recorded for a command buffer create (createBuffer) function for transmission to the client process.

During rendering by the client process, to be specific, when the client process receives an instruction transmitted by the browser process indicating that a canvas needs to be created and calls the WebGL function through getContext (in this case, the client process does not execute the instruction), the client process creates a corresponding draw layer (e.g., EAGLView) and establishes EAGLContext on the client. Subsequently, after receiving the command buffer, the client process converts the calling of the WebGL function into an OpenGL ES function (referred to as a second rendering function) to achieve rendering.

Therefore, the browser merely serves as an executor of the JS code. In this case, the browser only needs to load an extremely small or even blank HTML page (as long as the JS code can be normally executed) without any GPU resource-related overhead, which can significantly reduce memory consumption of WebView. In addition, since rendering no longer needs the browser, the rendering of the game screen of the mini game can be prevented from being affected by bugs caused by upgrading of the browser.

An exemplary structure of the page rendering apparatus 455 provided in the embodiments of this application implemented as a software module is further described below. In some embodiments, as shown in FIG. 3, the page rendering apparatus 455 stored in the memory 450 may include the following software modules:
a process starting module 4551, configured to execute service logic code of a mini program within an APP client through a browser process of a browser in response to a starting operation for the mini program;
a request transmitting module 4552, configured to transmit a calling processing request to the client process through the browser process in response to execution of calling code in for a first rendering function the service logic code through the browser process, the first rendering function being a browser-side graphics rendering function for rendering a page frame of the mini program;
a calling processing module 4553, configured to: in response to the calling processing request, determine a second rendering function through the client process, the second rendering function being a client-side graphics rendering function corresponding to the first rendering function, and call the second rendering function, wherein the page frame of the mini program is rendered through the second rendering function, to obtain a rendering result of the page frame of the mini program.

Herein, rendering of the page frame of the mini program through the second rendering function can be implemented in a graphics rendering module 4554.

In some embodiments of this application, the request transmitting module 4552 is further configured to: write calling information of the first rendering function into a command buffer through the browser process in response to the execution of the calling code for the first rendering function in the service logic code through the browser process; and generate the calling processing request for the command buffer and transmitting the calling processing request to the client process through the browser process.

In some embodiments of this application, the request transmitting module 4552 is further configured to generate the calling processing request for the command buffer and transmit the calling processing request to the client process through the browser process when the first rendering function is a synchronous rendering function with a return value.

In some embodiments of this application, the request transmitting module 4552 is further configured to generate the calling processing request for the command buffer and transmit the calling processing request to the client process through the browser process when calling information of a plurality of first rendering functions to be called during rendering of the page frame is recorded in the command buffer.

In some embodiments of this application, the page rendering apparatus 455 further includes: a script processing module 4555, configured to generate script code of the command buffer and inject the script code of the command buffer into the browser process through the client process. The script code of the command buffer is configured for creating the command buffer and controlling the browser process to write the calling information of the first rendering function into the command buffer.

In some embodiments of this application, the script processing module 4555 is further configured to: create a thread in the browser process, and execute the script code of the command buffer through the thread; or generate an executable file corresponding to the script code of the command buffer, and replace the calling code for the first rendering function with the executable file.

In some embodiments of this application, the request transmitting module 4552 is further configured to: set an access address of the calling processing request to a service address of the client process through the browser process; and intercept the calling processing request at the service address through the client process, to complete the transmission of the calling processing request to the client process.

In some embodiments of this application, the request transmitting module 4552 is further configured to return a virtual return value for the first rendering function and writing both the virtual return value and the calling information of the first rendering function into the command buffer through the browser process in response to the execution of the calling code for the first rendering function in the service logic code through the browser process when the first rendering function is a synchronous rendering function with a return value.

In some embodiments of this application, the page rendering apparatus 455 further includes: a mapping generation module 4556, configured to: parse the calling processing request to obtain the command buffer and extract the virtual return value from the command buffer through the client process; and use a return value of the second rendering function as a real return value of the first rendering function and establish a mapping relationship between the real return value and the virtual return value through the client process, the mapping relationship being configured for determining a corresponding real return value for the virtual return value in the command buffer in the future.

In some embodiments of this application, the calling information includes a calling parameter. The calling processing module 4553 is further configured to: parse the command buffer to obtain the calling parameter of the first rendering function and convert the calling parameter of the first rendering function into a calling parameter of the second rendering function through the client process; and transmit the calling parameter of the second rendering function to the second rendering function to complete the calling of the second rendering function through the client process.

An embodiment of this application provides a computer program product, the computer program product including a computer program or computer-executable instructions, the computer program or the computer-executable instructions being stored in a computer-readable storage medium. A processor of an electronic device reads the computer-executable instruction from the computer-readable storage medium, and the processor executes the computer-executable instruction, to cause the electronic device to perform the foregoing page rendering method in the embodiments of this application.

An embodiment of this application provides a computer-readable storage medium, having computer-executable instructions stored therein, the computer-executable instructions, when executed by a processor, causing the processor to perform the page rendering method provided in the embodiments of this application, for example, the page rendering method shown in FIG. 4.

In some embodiments, the computer-readable storage medium may be a memory such as a ferroelectric random access memory (FRAM), a ROM, a programmable read-only memory (PROM), an erasable programmable read-only memory (EPROM), an electrically erasable programmable read-only memory (EEPROM), a flash memory, a magnetic surface memory, a compact disc, or a compact disc read-only memory (CD-ROM), or may be various devices including one or any combination of the foregoing memories.

In some embodiments, the computer-executable instructions may be compiled in any form of programming language (including a compiling or interpretive language, or a declarative or procedural language) in a form of a program, software, a software module, a script, or code, and may be deployed in any form, for example, deployed as a standalone program or as a module, a component, a subroutine, or other units suitable for use in a computing environment.

In an example, the computer-executable instructions may but unnecessarily correspond to a file in a file system, and may be stored in a part of a file having other programs or data stored therein, for example, stored in one or more scripts in an HTML document, stored in a single file dedicated for a discussed program, or stored in a plurality of collaborative files (e.g., files having one or more modules, subprograms, or code portions stored therein).

In an example, the computer-executable instructions may be deployed to be executed on one electronic device, on a plurality of electronic devices located at one location, or on a plurality of electronic devices distributed at a plurality of locations and connected through a communication network.

In summary, in the embodiments of this application, when a user starts a mini program, the electronic device starts the browser process through the client process, executes the service logic code of the mini program through the browser, and transmits the calling processing request to the client process through the browser process when the service logic code needs to call the first rendering function, so as to convert the calling performed by the browser process on the first rendering function into the calling performed by the client process on the second rendering function through the calling processing request, and performs the graphics rendering on the page frame of the mini program through the second rendering function. In this way, the graphics rendering process of the page frame of the mini program can be transferred to the client for implementation. Therefore, the browser merely serves as an executor of the service logic code, which can significantly reduce the memory consumption of the browser, reduce a possibility of force close of the browser process, and finally reduce a risk of force close of the mini program. In addition, because the graphics rendering process of the page frame of the mini program is transferred to the client for implementation, the browser and the graphics rendering of the page frame of the mini program are unbundled. Therefore, even if upgrading of the browser causes running bugs, no impact is generated on the graphics rendering of the page frame of the mini program, so that normal use of the mini program can be ensured.

The foregoing descriptions are merely embodiments of this application, and are not intended to limit the protection scope of this application. Any modification, equivalent replacement, or improvement made within the spirit and principle of this application falls within the protection scope of this application.

## Claims

1. A page rendering method, executable by an electronic device, the electronic device comprising an application (APP) client and a browser, the method comprising:
executing service logic code of a mini program within the APP client through a browser process of the browser in response to a starting operation for the mini program;
transmitting a calling processing request to a client process of the APP client through the browser process, in response to execution of calling code for a first rendering function in the service logic code through the browser process, wherein the first rendering function is a browser-side graphics rendering function for rendering a page frame of the mini program;
in response to the calling processing request, determining a second rendering function through the client process, wherein the second rendering function is a client-side graphics rendering function corresponding to the first rendering function, and calling the second rendering function through the client process, wherein the page frame of the mini program is rendered through the second rendering function, to obtain a rendering result of the page frame of the mini program.

2. The method according to claim 1, wherein transmitting the calling processing request to the client process through the browser process in response execution of calling code for the first rendering function in the service logic code through the browser process comprises:
writing calling information of the first rendering function into a command buffer through the browser process in response to the execution of the calling code for the first rendering function in the service logic code through the browser process; and
generating the calling processing request for the command buffer through the browser process and transmitting the calling processing request to the client process through the browser process.

3. The method according to claim 1 or 2, wherein generating the calling processing request for the command buffer through the browser process and transmitting the calling processing request to the client process through the browser process comprises:
generating the calling processing request for the command buffer through the browser process and transmitting the calling processing request to the client process through the browser process, when the first rendering function is a synchronous rendering function with a return value.

4. The method according to any one of claims 1 to 3, wherein generating the calling processing request for the command buffer through the browser process and transmitting the calling processing request to the client process through the browser process comprises:
generating the calling processing request for the command buffer through the browser process and transmitting the calling processing request to the client process through the browser process, when respective calling information of a plurality of first rendering functions to be called during rendering of the page frame is recorded in the command buffer.

5. The method according to any one of claims 1 to 4, further comprising: before writing the calling information of the first rendering function into the command buffer through the browser process in response to the execution of the calling code for the first rendering function in the service logic code through the browser process,
generating script code of the command buffer through the client process; and
injecting the script code of the command buffer into the browser process through the client process, wherein the script code of the command buffer is configured for creating the command buffer, and for controlling the browser process to write the calling information of the first rendering function into the command buffer.

6. The method according to any one of claims 1 to 5, wherein injecting the script code of the command buffer into the browser process comprises:
creating a thread in the browser process, and executing the script code of the command buffer through the thread; or
generating an executable file corresponding to the script code of the command buffer, and replacing the calling code for the first rendering function with the executable file.

7. The method according to any one of claims 1 to 6, wherein transmitting the calling processing request to the client process comprises:
setting an access address of the calling processing request to a service address of the client process through the browser process; and
intercepting the calling processing request at the service address through the client process, to complete transmission of the calling processing request to the client process.

8. The method according to any one of claims 1 to 7, further comprising: before generating the calling processing request for the command buffer through the browser process and transmitting the calling processing request to the client process through the browser process,
when the first rendering function is a synchronous rendering function with a return value, returning a virtual return value for the first rendering function and writing both the virtual return value and the calling information of the first rendering function into the command buffer through the browser process, in response to the execution of the calling code for the first rendering function in the service logic code through the browser process.

9. The method according to any one of claims 1 to 8, further comprising:
parsing the calling processing request to obtain the command buffer and extracting a virtual return value from the command buffer, through the client process; and
using a return value of the second rendering function as a real return value of the first rendering function and establishing a mapping relationship between the real return value and the virtual return value, through the client process,
the mapping relationship being configured for determining the corresponding real return value for the virtual return value in the command buffer.

10. The method according to any one of claims 1 to 9, wherein the calling information comprises a calling parameter; and calling the second rendering function comprises:
parsing the command buffer to obtain the calling parameter of the first rendering function and converting the calling parameter of the first rendering function into a calling parameter of the second rendering function, through the client process; and
transmitting the calling parameter of the second rendering function to the second rendering function to complete the calling of the second rendering function, through the client process.

11. A page rendering apparatus, comprising:
a process starting module, configured to execute service logic code of a mini program within an application (APP) client through a browser process of a browser in response to a starting operation for the mini program;
a request transmitting module, configured to transmit a calling processing request to a client process of the APP client through the browser process in response to execution of calling code for a first rendering function in the service logic code through the browser process, wherein the first rendering function is a browser-side graphics rendering function for rendering a page frame of the mini program;
a calling processing module, configured to: in response to the calling processing request, determine a second rendering function through the client process, wherein the second rendering function is a client-side graphics rendering function corresponding to the first rendering function, and call the second rendering function through the client process, wherein the page frame of the mini program is rendered through the second rendering function, to obtain a rendering result of the page frame of the mini program.

12. An electronic device, comprising:
a memory, configured to store computer-executable instructions or a computer program; and
a processor, configured to implement the page rendering method according to any one of claims 1 to 10 when executing the computer-executable instructions or the computer program stored in the memory.

13. A computer-readable storage medium, for storing computer-executable instructions or a computer program that, when executed by a processor, implementing the page rendering method according to any one of claims 1 to 10.

14. A computer program product, comprising a computer program or computer-executable instructions that, when executed by a processor, implementing the page rendering method according to any one of claims 1 to 10.
